# EUROPÄISCHE PATENTSCHRIFT

(11) **EP 3 310 613 B1**
(45) Veröffentlichungstag und Bekanntmachung des Hinweises auf die Patenterteilung: **28.08.2019**
(21) Anmeldenummer: 16729538.5
(22) Anmeldetag: 10.06.2016
(51) Int. Cl.: B60N 2/90, B60N 2/66

(54) **FAHRZEUGSITZ**
VEHICLE SEAT
SIÈGE DE VÉHICULE

(30) Priorität: 17.06.2015 DE 102015211159; 18.09.2015 DE 102015217989
(43) Veröffentlichungstag der Anmeldung: 25.04.2018
(73) Patentinhaber: Adient Luxembourg Holding S.à r.l., 1855 Luxembourg (LU)
(72) Erfinder: KLEIN, Harald, 66909 Matzenbach (DE)
(74) Vertreter: Liedhegener, Ralf
(86) Internationale Anmeldenummer: PCT/EP2016/063257
(87) Internationale Veröffentlichungsnummer: WO 2016/202690

(56) Entgegenhaltungen:
- DE-A1- 10 242 760
- FR-A1- 2 994 073
- FR-A1- 3 009 246
- US-A1- 2010 244 504

## Beschreibung

Die Erfindung betrifft einen Fahrzeugsitz mit den Merkmalen des Oberbegriffs des Anspruchs 1.

### Stand der Technik

Aus der DE 10 2010 054 492 A1 ist eine Massageeinrichtung für eine Rückenlehne eines Fahrzeugsitzes bekannt, welche eine Steuereinrichtung, eine Förderpumpe zum Fördern von Luft und eine durch die Förderpumpe aufblasbare Luftkisseneinrichtung aufweist. Hierbei ist vorgesehen, dass die Luftkisseneinrichtung ein Luftkissen mit mehreren aufblasbaren Kammern und die Kammern miteinander verbindende Kanälen aufweist. Das Luftkissen ist hierbei über eine einzige Luftleitung befüllbar.

Aus der DE 102 42 760 B4 ist ein Fahrzeugsitz mit Massagefunktion und Kontureinstellung bekannt. Ein solcher Fahrzeugsitz umfasst ein Sitzkissen und eine Sitzlehne, welche jeweils mit einer Mehrzahl von druckbeaufschlagbaren Elementen zur Beeinflussung der Sitzkontur versehen sind, und eine Steuerung zur gezielten Druckbeaufschlagung der druckbeaufschlagbaren Elemente, wobei die Steuerung zur Erzielung unterschiedlicher Massageeffekte angepasst ist.

Aus der DE 101 39 412 A1 ist ferner ein Fahrzeugsitz mit einer aktiven Konturverstellung bekannt, dessen mittels Drucklust verstellbare Kissen mit einem Luftdrucksystem des Fahrzeuges verbindbar ist.

Aus der DE10 2012 000 167 A1 ist ein Fahrzeugsitz bekannt, dessen Sitzkissen und Lehne einen mit einem Medium befüllbaren Hohlraum aufweisen, in welchem das Medium gespeichert sein kann.

Darüber hinaus sind Fahrzeugsitze mit unterschiedlichen Anordnungen einer Mehrzahl an druckbeaufschlagbaren Elementen aus der DE 101 52 561 A1, der DE 83 27 656 U1 und der DE 10 2007 051 759 A1 bekannt.

Aus der US 2010/244504 A1 ist ein System zur Verwendung in einem Sitz bekannt, welches einen Rahmen mit einer ersten Seite und einer der ersten Seite im Wesentlichen gegenüberliegenden zweiten Seite, einer an der zweiten Seite des Rahmens montierten Pumpe, die Luft unter Druck setzen kann, und einem an der zweiten Seite montierten Steuermodul des Rahmens umfasst. Das System umfasst ferner eine Vielzahl von Luftzellen, die an der ersten Seite des Rahmens angebracht sind. Jede der Vielzahl von Luftzellen kommuniziert einzeln mit dem Steuermodul, um variable Mengen von Druckluft zu empfangen, die von der Pumpe bereitgestellt werden, so dass jede Luftzelle unabhängig aufblasbar ist.

Aus der FR 3 009 246 A1 ist eine Polsterung für einen Kraftfahrzeugsitz bekannt, welche zumindest eine erste Schaumstoffschicht, eine zweite Schaumstoffschicht und mindestens eine Luftkammer umfasst. Die Luftkammern umgibt mindestens eine Zwischenlage, welche die erste Schaumschicht und die zweite Schaumschicht verbindet.

Aus der DE 102 42 760 A1 ist ein Sitz mit einer Mehrzahl von Stellelementen in Form pneumatischer Blasen zur Veränderung der Sitzkontur und zur Erzielung eines Massageeffektes bekannt. Diese Stellelemente mit ihren vergleichsweise kleinen Blasen sind jeweils über separate Leitungen ansteuerbar und bewirken eine im Wesentlichen punktförmige Veränderung der Sitzkontur.

### Aufgabe

Der Erfindung liegt die Aufgabe zu Grunde, einen Fahrzeugsitz der eingangs genannten Art zu verbessern, insbesondere einen Fahrzeugsitz mit einem Massagesystem, welches mit einer ein druckführendes Medium bereitstellenden externen Versorgung verbindbar ist, zu ermöglichen.

### Lösung

Diese Aufgabe wird erfindungsgemäß durch einen Fahrzeugsitz mit den Merkmalen des Anspruches 1 gelöst.

Ein erfindungsgemäßer Fahrzeugsitz, insbesondere ein Nutzfahrzeugsitz, ist mit einem Sitzkissen und einer Lehne, sowie einem Massagesystem versehen, welches eine Mehrzahl von druckbeaufschlagbaren Elementen, sowie eine Steuerung zur gezielten Ansteuerung der druckbeaufschlagbaren Elemente aufweist, um einen Massageeffekt zu erzielen. Die druckbeaufschlagbaren Elemente sind jeweils separat über Verbindungsleitungen mit einem Druck beaufschlagbar.

Dadurch, dass das Massagesystem zur Versorgung mit einem druckführenden Medium an einen Anschluss einer externen Druckluftversorgung, insbesondere einer Druckluftversorgung eines Fahrzeugs, anschließbar ist, lassen sich die Erfordernisse einer eigenen Erzeugung und Versorgung mit Druckluft, beispielsweise mittels einer im Fahrzeugsitz verbauten Pumpe oder dergleichen vermeiden. Hierdurch lassen sich in vorteilhafter Weise die Produktionskosten senken, und ferner entfällt eine andernfalls notwendige Beanspruchung von entsprechendem Bauraum zum Einbauen einer entsprechenden Pumpe oder dergleichen.

Die druckbeaufschlagbaren Elemente sind auf einer einem Insassen zugewandten Seite eines Schaumteils einer Polsterung des Sitzkissens und/oder der Lehne, insbesondere in einem Bereich zwischen dem Schaumteil und einem Bezug der Polsterung, angeordnet. Weiterhin sind weitere druckbeaufschlagbare Elemente auf einer einem Insassen abgewandten Seite eines Schaumteils einer Polsterung des Sitzkissens und/oder der Lehne angeordnet, wodurch sich ein Massagedruck durch die druckbeaufschlagbaren Elemente großflächiger auf einen Rücken des Insassen übertragen lässt. Ferner lässt sich hierdurch eine Funktion einer Lordosenstütze realisieren und die Kontur der Lehne ergonomisch verstellen.

Ferner kann das Schaumteil hierbei mehrere, jeweils an ein druckbeaufschlagbares Element in einem nicht entfalteten Zustand, angepasste Ausnehmungen aufweisen. Dies ermöglicht eine intensiver empfundene punktuelle Massage eines Rückens des Insassen mittels der nah am Rücken angeordneten druckbeaufschlagbaren Elemente, welche zudem in den Ausnehmungen vor einem Verrutschen gesichert sein können.

Ergänzend ist es ebenfalls möglich, dass eine Mehrzahl an druckbeaufschlagbaren Elementen vorgesehen ist, um in vorteilhafter Weise eine erhöhte Anzahl möglicher Massageprogramme zu ermöglichen.

Ferner können die druckbeaufschlagbaren Elemente jeweils mit einer eigenen Verbindungsleitung mit der Steuerung verbunden sein, wodurch sich eine Vielzahl an individuellen Massageprogrammen realisieren lässt.

Darüber hinaus kann zwischen dem Anschluss und der Steuerung ein Regelventil angeordnet sein. Hierbei kann das Regelventil weiter eingerichtet sein, einen Druck des druckführenden Mediums auf ein vorgegebenes Druckniveau, insbesondere in einem Bereich von 200 bis 600 hPa, bevorzugt in einem Bereich von 300 bis 500 hPa, zu reduzieren. Hierdurch lassen sich in vorteilhafte Weise druckbeaufschlagbare Elemente mit einer geringeren Druckfestigkeit verwenden, welche kostengünstiger und flexibler ausgestaltet sein können.

Das Regelventil kann ebenso eingerichtet sein, das druckführende Medium auf einen vorbestimmten Wert eines Volumenstromes, insbesondere in einem Bereich von 5 bis 10 Liter pro Minute, zu begrenzen. Dies hat den Vorteil, dass ebenfalls die Geschwindigkeit mit der das druckführende Medium die druckbeaufschlagbaren Elemente befüllt und somit auch die zu Befüllen der druckbeaufschlagbaren Elemente benötigte Zeit gezielt beeinflusst werden kann.

Ferner kann eine Benutzerschnittstelle vorgesehen sein, mittels welcher ein Insasse eines oder mehrere der druckbeaufschlagbaren Elemente manuell mit dem druckführenden Medium kontrolliert befüllen oder entleeren kann.

### Figuren und Ausführungsformen der Erfindung

Bevor nachfolgend Ausgestaltungen der Erfindung eingehender an Hand von Zeichnungen beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: einen schematischen Fahrzeugsitz mit einem Massagesystem gemäß einem ersten Ausführungsbeispiel,
- Fig. 2:: einen schematischen Fahrzeugsitz mit einem Massagesystem gemäß einem zweiten Ausführungsbeispiel,
- Fig. 3:: einen schematischen Aufbau des Massagesystems gemäß des ersten Ausführungsbeispiels von Fig. 1,
- Fig. 4:: einen schematischen Aufbau des Massagesystems gemäß des zweiten Ausführungsbeispiels von Fig. 2,
- Fig. 5:: einen schematischen Aufbau eines dritten Ausführungsbeispiels des Massagesystems,
- Fig. 6:: eine schematische Darstellung eines Halteelementes mit einer Mehrzahl von druckbeaufschlagbaren Elementen, gemäß des ersten Ausführungsbeispiels von Fig. 1,
- Fig. 7:: eine Querschnittsdarstellung eines beispielhaften druckbeaufschlagbaren Elements,
- Fig. 8:: eine schematische Darstellung eines Halteelementes mit einer Mehrzahl von druckbeaufschlagbaren Elementen, gemäß des zweiten Ausführungsbeispiels von Fig. 2 und
- Fig. 9:: eine schematische Darstellung eines Lordosenstützelements mit einer Mehrzahl von druckbeaufschlagbaren Elementen, gemäß des zweiten Ausführungsbeispiels von Fig. 2.

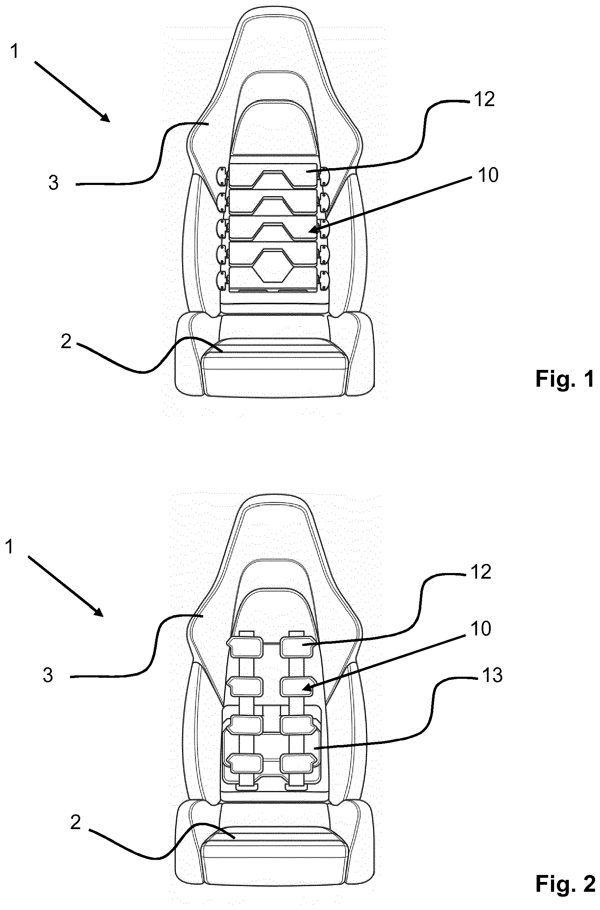

In Fig. 1 ist ein Fahrzeugsitz 1 mit einem Massagesystem 10 gemäß einem ersten Ausführungsbeispiel schematisch dargestellt. Der Fahrzeugsitz 1 ist insbesondere ein Nutzfahrzeugsitz. Der Fahrzeugsitz 1 weist ein Sitzkissen 2 und eine Lehne 3 auf. In der Lehne 3 ist ein Massagesystem 10 angeordnet, welches eine Mehrzahl von druckbeaufschlagbaren Elementen 12 aufweist. Das Massagesystem 10 weist eine Steuerung 14 zur gezielten Ansteuerung der druckbeaufschlagbaren Elemente 12 auf, um einen Massageeffekt zu erzielen. Vorzugsweise ist die Steuerung 14 dazu eingerichtet, vorprogrammierte Massageprogramme, welche in der Abfolge der druckbeaufschlagten Elemente 12, der Druckintensität, der Dauer einer Beaufschlagung mit einem druckführenden Medium, oder einer anderen Eigenschafft individuell gestaltbar sind, zu speichern und auszuführen. Die druckbeaufschlagbaren Elemente 12 können hierbei einen im Wesentlichen druckfreien und nicht entfalteten Zustand aufweisen, in welchem sie weitestgehend flach zusammengelegt sind. Ferner lassen sich die druckbeaufschlagbaren Elemente 12 durch eine Befüllung mit dem druckführenden Medium kontinuierlich bis zu einem vollständig entfalteten Zustand vergrößern, wobei die Befüllung mit dem druckführenden Medium eine Volumenänderung des druckbeaufschlagbaren Elements 12 bewirkt.

Die dargestellten druckbeaufschlagbaren Elemente 12 sind gemäß des ersten Ausführungsbeispiels auf der sogenannten B-Seite, das bedeutet auf der einem Insassen abgewandten Seite einer mittels eines Schaumteils gebildeten Polsterung der Lehne 3 des Fahrzeugsitzes 1, angeordnet. Die Polsterung umfasst vorzugsweise ein mit einem Bezug wenigstens teilweise überzogenes Schaumteil. Entsprechend dieses Ausführungsbeispiels werden die druckbeaufschlagbaren Elemente 12 in eine entsprechend ausgestaltete, aus darstellungstechnischen Gründen nicht dargestellte, Halterung, welche beispielsweise in einer Rahmenstruktur der Lehne 3 angeordnet ist, eingehangen.

In Fig. 2 ist ein Fahrzeugsitz 1 mit einem Massagesystem 10 gemäß einem zweiten Ausführungsbeispiel schematisch dargestellt. Das hier gezeigte zweite Ausführungsbeispiel unterscheidet sich von dem ersten Ausführungsbeispiel gemäß Fig. 1 lediglich dadurch, dass die dargestellten druckbeaufschlagbaren Elemente 12 gemäß dieses zweiten Ausführungsbeispiels auf der sogenannten A-Seite angeordnet sind, das bedeutet auf der einem Insassen zugewandten Seite eines Schaumteils einer Polsterung der Lehne 3 des Fahrzeugsitzes 1, insbesondere in einem Bereich zwischen dem Schaumteil und einem Bezug der Polsterung. Ferner ist es möglich, dass das Schaumteil, zwecks einer gegen einem Verrutschen gesicherten Aufnahme der druckbeaufschlagbaren Elemente 12, mehrere, jeweils an ein druckbeaufschlagbares Element in einem nicht entfalteten Zustand, angepasste Ausnehmungen aufweist. Weiterhin weist das Massagesystem 10 gemäß des dargestellten zweiten Ausführungsbeispiels ein vorwiegend auf der B-Seite angeordnetes Lordosenstützelement 13 auf, welches im Wesentlichen dem Aufbau und dem Wirkprinzip des ersten Ausführungsbeispiels des Massagesystems 10 entspricht.

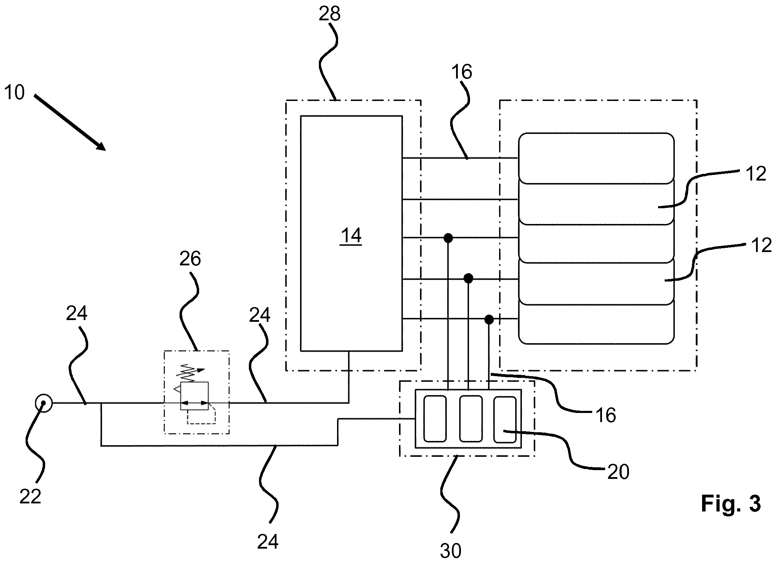

In Fig. 3 ist ein Aufbau des Massagesystems 10 gemäß des ersten Ausführungsbeispiels von Fig. 1 schematisch dargestellt. Das Massagesystem 10 ist erfindungsgemäß zur Versorgung mit einem druckführenden Medium an einen Anschluss 22 einer externen Druckluftversorgung, insbesondere einer Druckluftversorgung eines Fahrzeugs, anschließbar. Von dem Anschluss 22 führt eine Anschlussleitung 24 zu einer Steuereinheit 28. Wie Fig. 3 zeigt, kann in der Anschlussleitung 24 ein Regelventil 26 angeordnet sein, welches insbesondere das Druckniveau des von dem Anschluss 22 entnommenen druckführenden Mediums auf ein vorgegebenes Druckniveau reduziert. Üblicherweise weist ein beispielsweise in einem Nutzfahrzeug vorhandenes Luftdrucksystem zur Betätigung eines Luftbremssystems und/oder eines Sitzhöheneinstellers und/oder einer Sitzfederung ein Druckniveau im Bereich von 6 bis 12 bar auf, welches entsprechend ebenfalls an dem Anschluss 22 anliegt. Dieses Druckniveau kann mittels des Regelventils 26 entsprechend auf ein Druckniveau im Bereich von 200 bis 600 hPa (Hektopascal), bevorzugt 300 bis 500 hPa (Hektopascal), reduziert werden. Weiterhin kann es vorgesehen sein, dass das Regelventil 26 dazu eingerichtet ist, das druckführende Medium auf einen vorgegebenen Volumenstrom zu begrenzen.

Die Steuereinheit 28 umfasst insbesondere eine Steuerung 14, um die unterschiedlichen druckbeaufschlagbaren Elemente 12 einzeln anzusteuern. Hierzu sind die druckbeaufschlagbaren Elemente 12 jeweils mit einer eigenen Verbindungsleitung 16 mit der Steuerung 14 strömungstechnisch verbunden. Die Verbindungsleitung 16 kann bevorzugt ein Pneumatikschlauch sein. Zum Befüllen und zum Entfalten der druckbeaufschlagbaren Elemente 12 wird von der Steuerung 14 eine Verbindung zwischen der Anschlussleitung 24 und der jeweiligen Verbindungsleitung 16 hergestellt, so dass das druckführende Medium von dem Anschluss 22 bis in das jeweilige druckbeaufschlagbare Element 12 einströmen kann. Um ein Überfüllen des druckbeaufschlagbaren Elements 12 zu verhindern, kann zwischen der Steuerung 14 und den druckbeaufschlagbaren Elementen 12 ein Überdruckventil vorgesehen sein. Das Überdruckventil kann integraler Bestandteil der Steuerung 14 sein.

Ferner weist das in Fig. 3 dargestellte Ausführungsbreispiel eine Benutzerschnittstelle 30 auf. Die Benutzerschnittstelle 30 ist ebenfalls mit der Anschlussleitung 24 verbunden, so dass die Benutzerschnittstelle 30 eingangsseitig mit dem druckführenden Medium versorgt ist. Die Benutzerschnittstelle 30 ist weiter ausgangsseitig über Verbindungsleitungen 16 mit einer Teilmenge oder einer Gesamtmenge der druckbeaufschlagbaren Elementen 12 verbunden. Vorzugsweise der Teilmenge, welche im Bereich der Lendenwirbel eines Insassen angeordnet sind. Mittels der Benutzerschnittstelle 30 kann der Insasse die im Lendenwirbelbereich angeordneten druckbeaufschlagbaren Elemente 12 manuell mit dem druckführenden Medium, insbesondere mit Druckluft, befüllen oder entleeren. Diese Möglichkeit der manuellen Einstellung dient einer kontinuierlichen Einstellung einer Sitzkontur mit der Funktion einer Lordosenstütze, wenn das Massagesystem 10 deaktiviert ist.

Nach einer Aktivierung des Massagesystems 10, insbesondere eines Starts eines Massageprogrammes, entleert die Steuerung 14 zunächst die druckbeaufschlagbaren Elemente 12, insbesondere jene druckbeaufschlagbaren Elemente 12, welche die Funktion einer Lordosenstütze bereitstellen. Das Entleeren der druckbeaufschlagbaren Elemente 12 erfolgt allgemein durch Öffnen eines entsprechenden Ventils, beispielsweise eines entsprechend steuerbaren Ventils und/oder aktiv zu öffnenden Überdruckventils. Eine aktive Entleerung der druckbeaufschlagbaren Elemente 12 ist nicht erforderlich. Die druckbeaufschlagbaren Elemente 12 werden vielmehr durch einen zwischen dem Schaumteil und dem Bezug oder zwischen dem Schaumteil und der Rahmenstruktur der Lehne 3 des Fahrzeugsitzes 1 erzeugten Druck, beispielsweise von einem Insassen oder dem Schaumteil erzeugten Druck, zusammengedrückt und folglich weitest gehend entleert.

Nach Abschluss eines vorprogrammierten Massageprogramms und/oder nach Ablauf einer vorgegebenen Zeit kann das Massagesystem automatisch beendet werden. Nach Beendigung des Massageprogramms kann die Steuerung 14 diejenigen druckbeaufschlagbaren Elemente 12, welche als Lordosenstütze einsetzbar sind, wieder auf den anfangs eingestellten Zustand zurückführen und entsprechend mit dem druckführenden Medium beaufschlagen.

Die Benutzerschnittstelle 30 kann dem Insassen zur Bedienung entsprechende Tasten, insbesondere Tasten eines Schalters 20, zur Verfügung stellen. Ferner kann die Benutzerschnittstelle 30 ebenfalls ein Überdruckventil aufweisen. Entgegen der dargestellten Anbindung der Benutzerschnittstelle 30 an den Anschluss 22, kann die Anschlussleitung 24 ebenfalls strömungstechnisch hinter dem Regelventil 26 angebunden sein, wodurch die Benutzerschnittstelle 30 ebenfalls mit dem das verminderte Druckniveau aufweisende druckführenden Medium beaufschlagt werden. Denkbar ist ferner ebenfalls dass die Benutzerschnittstelle 30 ein eigenes Regelventil zur Bereitstellung eines von dem am Ausgang des Regelventils 26 anliegenden Druckniveau unterschiedlichen Druckniveaus vorgesehen ist.

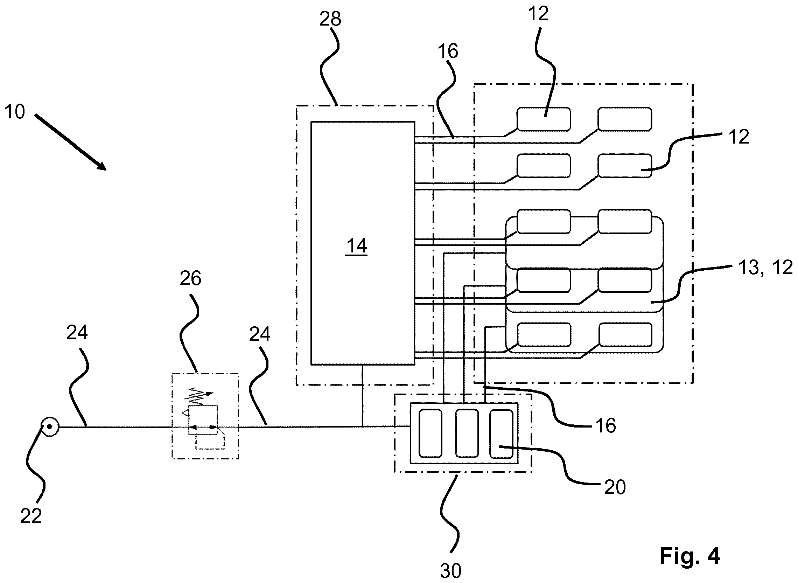

In Fig. 4 ist ein Aufbau des Massagesystems gemäß des zweiten Ausführungsbeispiels von Fig. 2 schematisch dargestellt. Dieses Ausführungsbeispiel zeigt eine zuvor erwähnte Anbindung der Anschlussleitung 24 für die Benutzerschnittstelle 30 in einem strömungstechnisch hinter dem Regelventil 26 befindlichen Teilabschnitt. Das in Fig. 4 gezeigte Massagesystem 10 entspricht ferner im Wesentlichen dem Ausführungsbeispiel gemäß Fig. 3, mit Ausnahme der druckbeaufschlagbaren Elemente 12. Die druckbeaufschlagbaren Elemente 12 des zweiten Ausführungsbeispiels von Fig. 2 sind in Blickrichtung eines in dem Fahrzeugsitz 1 von Fig. 2 sitzenden Insassen betrachtet in eine linke und rechte Seite untergliedert. Hierdurch verdoppelt sich vergleichsweise die Anzahl der Verbindungsleitungen 16 zur Ansteuerung durch die Steuerung 14. Diese Variante der in eine linke und rechte Seite untergliederten, kleineren druckbeaufschlagbaren Elemente 12 ist vorzugsweise auf der A-Seite eines Schaumteils angeordnet. Hierdurch lässt sich ein direkteres und punktuelleres Druckempfinden erzielen.

Zur Bereitstellung einer Stützfunktion für den Bereich der Lendenwirbel eines Insassen ist ein Lordosenstützelement 13 vorgesehen, welche insbesondere drei druckbeaufschlagbare Elemente 12 aufweist. Das Lordosenstützelement 13 ist vorzugsweise auf der B-Seite des Schaumteils einer Lehne 3 eines Fahrzeugsitzes 1 angeordnet. Das Lordosenstützelement 13 ist mittels einer Benutzerschnittstelle 30 einstellbar.

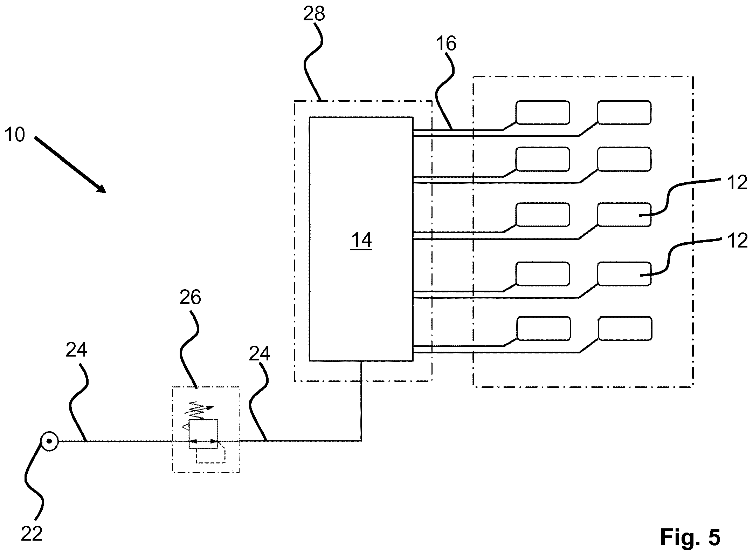

In Fig. 5 ist ein Aufbau eines weiteren Ausführungsbeispiels des Massagesystems 10 schematisch dargestellt. Das dargestellte Ausführungsbeispiel entspricht im Wesentlichen dem Ausführungsbeispiel gemäß Fig. 4, mit der Ausnahme, dass eine Funktion der Lordosenstütze nicht vorgesehen ist.

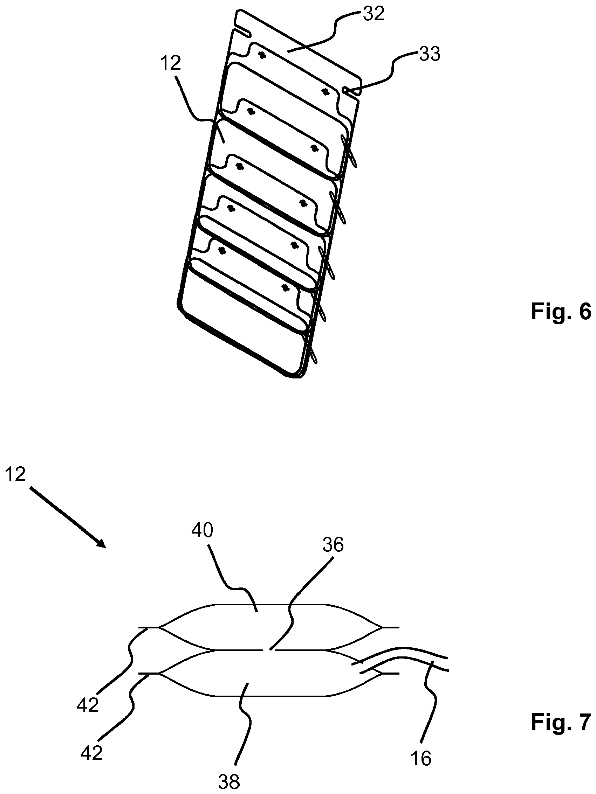

In Fig. 6 ist ein Halteelement 32 mit einer Mehrzahl von druckbeaufschlagbaren Elementen 12 schematisch dargestellt, welches in dem ersten Ausführungsbeispiel gemäß Fig. 1 eingesetzt ist. Das Halteelement 32 positioniert die Mehrzahl an druckbeaufschlagbaren Elementen 12 relativ zueinander und hält diese in Position. Das Haltelement 32 weist ferner Verbindungsmittel 33 auf, mittels welcher das Haltelement 32 mit einer Rahmenstruktur einer Lehne 3 eines Fahrzeugsitzes 1 befestigt werden kann, insbesondere eingehangen werden kann.

In Fig. 7 ist eine Querschnittsdarstellung eines beispielhaften druckbeaufschlagbaren Elements 12 dargestellt, welches eine erste Kammer 38 und eine zweite Kammer 40 aufweist. Die erste Kammer 38 und die zweite Kammer 40 sind über eine Durchgangsöffnung 36 strömungstechnisch miteinander verbunden. Die druckbeaufschlagbaren Elementen 12 sind vorzugsweise aus einem Kunststoff, insbesondere einer Kunststofffolie, gefertigt. Die druckbeaufschlagbaren Elementen 12 können ferner unter Bildung einer Verbindungsnaht 42, insbesondere einer gasdichten Schweißnaht, in einem äußeren Randbereich der druckbeaufschlagbaren Elementen 12 gefertigt sein. Die erste Kammer 38 ist ferner strömungstechnisch mit der Verbindungsleitung 16 verbunden.

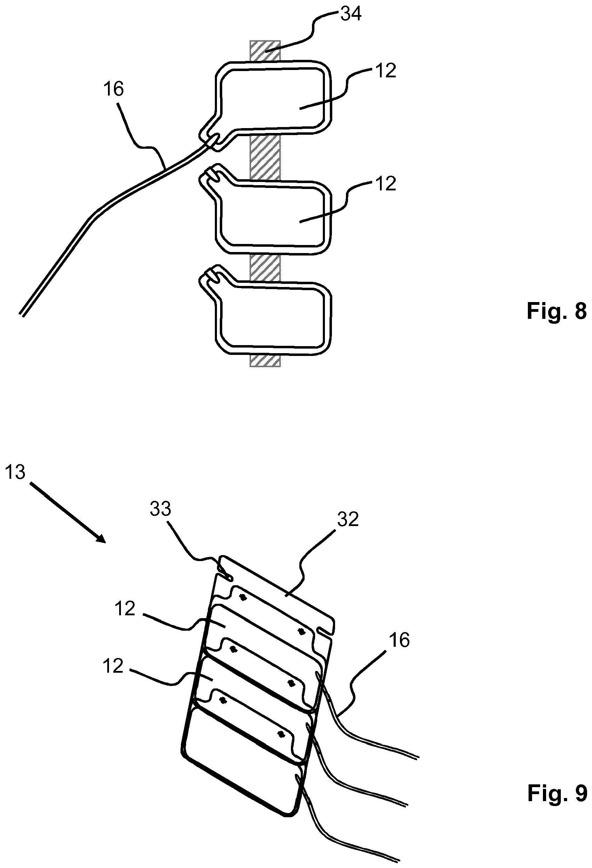

In Fig. 8 ist ein Halteelement 32 mit einer Mehrzahl von druckbeaufschlagbaren Elementen 12, gemäß des zweiten Ausführungsbeispiels von Fig. 2, schematisch dargestellt. Die druckbeaufschlagbaren Elemente 12 weisen bevorzugt den Aufbau gemäß Fig. 7 auf. Zur Positionierung relativ zueinander sind die druckbeaufschlagbaren Elemente 12 auf einem Verbindungsstreifen 34 angeordnet. Die druckbeaufschlagbaren Elemente 12 sind mit dem Verbindungsstreifen fest verbunden, bevorzugt mittels einer Klebeverbindung verbunden. Zur Anordnung auf der A-Seite eines Schaumteils des Sitzkissens 2 und/oder der Lehne 3 des Fahrzeugsitzes 1 weist das Schaumteil bevorzugt entsprechend vorgesehene Ausnehmungen auf, welche jeweils ein druckbeaufschlagbares Element 12 aufnehmen und vor einem Verrutschen sichern.

In Fig. 9 ist ein Lordosenstützelement 13 schematisch dargestellt, welches eine Mehrzahl von druckbeaufschlagbaren Elementen 12, gemäß des zweiten Ausführungsbeispiels von Fig. 2, aufweist. Das Lordosenstützelement 13 entspricht im Wesentlichen dem Aufbau des in Fig. 6 gezeigten Halteelements 32.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein, solange der resultierende Gegenstand dem Umfang entspricht, der durch die Ansprüche definiert ist.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Fahrzeugsitz
- 2: Sitzkissen
- 3: Lehne
- 10: Massagesystem
- 12: druckbeaufschlagbares Element
- 13: Lordosenstützelement
- 14: Steuerung
- 16: Verbindungsleitung
- 20: Schalter
- 22: Anschluss
- 24: Anschlussleitung
- 26: Regelventil
- 28: Steuereinheit
- 30: Benutzerschnittstelle
- 32: Haltelement
- 33: Verbindungselement
- 34: Verbindungsstreifen
- 36: Durchgangsöffnung
- 38: erste Kammer
- 40: zweite Kammer
- 42: Verbindungsnaht

## Patentansprüche

1. Fahrzeugsitz (1), insbesondere Nutzfahrzeugsitz, mit einem Sitzkissen (2) und einer Lehne (3), sowie einem Massagesystem (10), welches eine Mehrzahl von druckbeaufschlagbaren Elementen (12) aufweist, sowie einer Steuerung (14) zur gezielten Ansteuerung der druckbeaufschlagbaren Elemente (12), um einen Massageeffekt zu erzielen, wobei die druckbeaufschlagbaren Elemente (12) jeweils separat über Verbindungsleitungen (16) mit einem Druck beaufschlagbar sind, wobei das Massagesystem (10) zur Versorgung mit einem druckführenden Medium an einen Anschluss (22) einer externen Druckluftversorgung anschließbar ist,
**dadurch gekennzeichnet, dass**
die druckbeaufschlagbaren Elemente (12) auf einer einem Insassen zugewandten Seite eines Schaumteils einer Polsterung des Sitzkissens (2) und/oder der Lehne (3) angeordnet sind, und weitere druckbeaufschlagbare Elemente (12) auf einer einem Insassen abgewandten Seite eines Schaumteils einer Polsterung des Sitzkissens (2) und/oder der Lehne (3) angeordnet sind.

2. Fahrzeugsitz (1) gemäß Anspruch 1, wobei die externe Druckluftversorgung eine Druckluftversorgung eines Fahrzeugs ist.

3. Fahrzeugsitz (1) gemäß einem der Ansprüche 1 oder 2, wobei die druckbeaufschlagbaren Elemente (12) auf der dem Insassen zugewandten Seite des Schaumteils in einem Bereich zwischen dem Schaumteil und einem Bezug der Polsterung angeordnet sind.

4. Fahrzeugsitz (1) gemäß einem der Ansprüche 1 bis 3, wobei die weiteren druckbeaufschlagbaren Elemente (12) auf der dem Insassen abgewandten Seite des Schaumteils in einem Bereich zwischen dem Schaumteil und einer Rahmenstruktur der Lehne (3) angeordnet sind.

5. Fahrzeugsitz (1) gemäß einem der Ansprüche 1 bis 4, wobei das Schaumteil mehrere in ihrer Größe, jeweils einem nicht entfalteten Zustand eines druckbeaufschlagbaren Elements (12) entsprechenden Umfang, angepasste Ausnehmungen aufweist.

6. Fahrzeugsitz (1) gemäß einem der Ansprüche 1 bis 5, wobei zwischen dem Anschluss (22) und der Steuerung (14) ein Regelventil (26) angeordnet ist.

7. Fahrzeugsitz (1) gemäß Anspruch 6, wobei das Regelventil (26) eingerichtet ist, einen Druck des druckführenden Mediums auf ein vorgegebenes Druckniveau zu reduzieren.

8. Fahrzeugsitz (1) gemäß Anspruch 7, wobei der Druck auf ein Druckniveau in einem Bereich von 200 bis 600 hPa reduziert ist.

9. Fahrzeugsitz (1) gemäß Anspruch 7, wobei der Druck auf ein Druckniveau in einem Bereich von 300 bis 500 hPa reduziert ist.

10. Fahrzeugsitz (1) gemäß einem der Ansprüche 6 bis 9, wobei das Regelventil (26) eingerichtet ist, das druckführende Medium auf einen vorbestimmten Wert eines Volumenstromes zu begrenzen.

11. Fahrzeugsitz (1) gemäß einem der Ansprüche 9 oder 10, wobei der Volumenstrom auf einen Wert im Bereich von 5 bis 10 Liter pro Minute begrenzt ist.

12. Fahrzeugsitz (1) gemäß einem der Ansprüche 1 bis 11, wobei eine Benutzerschnittstelle (30) vorgesehen ist, mittels welcher ein Insasse eines oder mehrere der druckbeaufschlagbaren Elemente (12) manuell mit dem druckführenden Medium kontrolliert befüllen oder entleeren kann.

## Claims

1. Vehicle seat (1), in particular a commercial vehicle seat, having a seat cushion (2) and a backrest (3), and a massage system (10) which has a plurality of elements (12) which can be pressurized, and a controller (14) for the targeted actuation of the elements (12) which can be pressurized, in order to achieve a massage effect, it being possible for the elements (12) which can be pressurized to be loaded with a pressure in each case separately via connecting lines (16), it being possible for the massage system (10) to be connected to a connector (22) of an external compressed air supply for the supply with a pressure-conducting medium, **characterized in that** the elements (12) which can be pressurized are arranged on a side of a foam part of a padding means of the seat cushion (2) and/or the backrest (3), which side faces an occupant, and further elements (12) which can be pressurized are arranged on a side of a foam part of a padding means of the seat cushion (2) and/or the backrest (3), which side faces away from an occupant.

2. Vehicle seat (1) according to Claim 1, the external compressed air supply being a compressed air supply of a vehicle.

3. Vehicle seat (1) according to either of Claims 1 and 2, the elements (12) which can be pressurized being arranged on that side of the foam part which faces the occupant in a region between the foam part and a cover of the padding means.

4. Vehicle seat (1) according to one of Claims 1 to 3, the further elements (12) which can be pressurized being arranged on that side of the foam part which faces away from the occupant in a region between the foam part and a frame structure of the backrest (3).

5. Vehicle seat (1) according to one of Claims 1 to 4, the foam part having a plurality of recesses, the size of which is adapted in each case to a circumference which corresponds to a non-deployed state of an element (12) which can be pressurized.

6. Vehicle seat (1) according to one of Claims 1 to 5, a regulating valve (26) being arranged between the connector (22) and the controller (14).

7. Vehicle seat (1) according to one of Claims 1 to 6, the regulating valve (26) being set up to reduce a pressure of the pressure-conducting medium to a predefined pressure level.

8. Vehicle seat (1) according to Claim 7, the pressure being reduced to a pressure level in a range from 200 to 600 hPa.

9. Vehicle seat (1) according to Claim 7, the pressure being reduced to a pressure level in a range from 300 to 500 hPa.

10. Vehicle seat (1) according to one of Claims 6 to 9, the regulating valve (26) being set up to limit the pressure-conducting medium to a predefined value of a volumetric flow.

11. Vehicle seat (1) according to either of Claims 9 and 10, the volumetric flow being limited to a value in the range from 5 to 10 liters per minute.

12. Vehicle seat (1) according to one of Claims 1 to 11, a user interface (30) being provided, by means of which an occupant can manually fill or empty one or more of the elements (12) which can be pressurized, in a controlled manner with the pressure-conducting medium.

## Revendications

1. Siège de véhicule (1), en particulier siège de véhicule utilitaire, avec un coussin de siège (2) et un dossier (3), ainsi qu'un système de massage (10), lequel comporte une pluralité d'éléments pouvant être sollicités en pression (12), ainsi qu'une commande (14) pour le pilotage précis des éléments pouvant être sollicités en pression (12) pour obtenir un effet de massage, dans lequel les éléments pouvant être sollicités en pression (12) peuvent être respectivement sollicités séparément avec une pression par le biais de conduits de liaison (16), dans lequel le système de massage (10) peut être raccordé pour l'alimentation avec un milieu conducteur de pression à un raccord (22) d'une alimentation d'air comprimé externe,
**caractérisé en ce que**
les éléments pouvant être sollicités en pression (12) sont disposés sur un côté tourné vers un occupant d'une partie mousse d'un rembourrage du coussin de siège (2) et/ou du dossier (3) et d'autres éléments pouvant être sollicités en pression (12) sont disposés sur un côté opposé à un occupant d'une partie mousse d'un rembourrage du coussin de siège (2) et/ou du dossier (3).

2. Siège de véhicule (1) selon la revendication 1, dans lequel l'alimentation d'air comprimé externe est une alimentation d'air comprimé d'un véhicule.

3. Siège de véhicule (1) selon l'une quelconque des revendications 1 ou 2, dans lequel les éléments pouvant être sollicités en pression (12) sont disposés sur le côté tourné vers l'occupant de la partie mousse dans une zone située entre la partie mousse et un revêtement du rembourrage.

4. Siège de véhicule (1) selon l'une quelconque des revendications 1 à 3, dans lequel les autres éléments pouvant être sollicités en pression (12) sont disposés sur le côté opposé à l'occupant de la partie mousse dans une zone située entre la partie mousse et une structure de cadre du dossier (3).

5. Siège de véhicule (1) selon l'une quelconque des revendications 1 à 4, dans lequel la partie mousse comporte plusieurs évidements adaptés dans leur dimension respectivement à un volume correspondant à un état non développé d'un élément pouvant être sollicité en pression (12).

6. Siège de véhicule (1) selon l'une quelconque des revendications 1 à 5, dans lequel une vanne de régulation (26) est disposée entre le raccord (22) et la commande (14).

7. Siège de véhicule (1) selon l'une quelconque des revendications 1 à 6, dans lequel la vanne de régulation (26) est agencée pour réduire une pression du milieu conducteur de pression à un niveau de pression prédéfini.

8. Siège de véhicule (1) selon la revendication 7, dans lequel la pression est réduite à un niveau de pression se situant dans une plage de 200 à 600 hPa.

9. Siège de véhicule (1) selon la revendication 7, sachant que la pression est réduite à un niveau de pression se situant dans une plage de 300 à 500 hPa.

10. Siège de véhicule (1) selon l'une quelconque des revendications 6 à 9, dans lequel la vanne de régulation (26) est agencée pour limiter le milieu conducteur de pression à une valeur prédéfinie d'un débit volumique.

11. Siège de véhicule (1) selon l'une quelconque des revendications 9 ou 10, dans lequel le débit volumique est limité à une valeur se situant dans la plage de 5 à 10 litres par minute.

12. Siège de véhicule (1) selon l'une quelconque des revendications 1 à 11, dans lequel une interface d'utilisateur (30) est prévue au moyen de laquelle un occupant peut remplir ou vider manuellement de façon contrôlée un ou plusieurs des éléments pouvant être sollicités en pression (12) du milieu conducteur de pression.
